# EUROPÄISCHE PATENTSCHRIFT

(11) **EP 2 008 805 B1**
(45) Veröffentlichungstag und Bekanntmachung des Hinweises auf die Patenterteilung: **19.01.2011**
(21) Anmeldenummer: 08011326.9
(22) Anmeldetag: 23.06.2008
(51) Int. Cl.: B32B 3/12, B32B 3/24, E04B 1/84, E04C 2/36

(54) **Schallabsorbierendes Raumteilelement**
Sound-absorbing room dividing element
Elément spatial partiel absorbant le son

(30) Priorität: 27.06.2007 DE 102007029751
(43) Veröffentlichungstag der Anmeldung: 31.12.2008
(73) Patentinhaber: Nimbus Group GmbH, 70469 Stuttgart (DE)
(72) Erfinder: Brennenstuhl, Dietrich, 70193 Stuttgart (DE); Schütz, Veit, 70197 Stuttgart (DE); Künzel, Gernot, 70199 Stuttgart (DE)
(74) Vertreter: Friz, Oliver

(56) Entgegenhaltungen:
- EP-A- 1 188 547
- WO-A-2004/016872
- DE-C1- 19 928 712

## Beschreibung

Die Erfindung betrifft ein schallabsorbierendes Raumteilerelement.

Schallabsorbierende Raumteilerelemente sind bekannt. Sie finden häufig Anwendung in öffentlichen Gebäuden oder Großraumbüros. Dort haben sie die Aufgabe für das menschliche Gehör wahrnehmbare Geräusche so zu dämpfen, dass beispielsweise ein relativ ungestörtes Arbeiten möglich ist. Derartige schallabsorbierende Raumteilerelemente benutzen hierfür oft poröses oder faseriges Material, um LuftschallSchwingungen durch Reibung an ihrer feinstrukturierten, möglichst offenen Oberflächenstruktur zu dissipieren. Die offenen Oberflächenstrukturen werden oft durch eine geschlossene oder gelochte Abdeckschicht geschützt.

Aus EP-A-1 188 547 ist eine schallabsorbierende Verbundplatte, die auch als Trennwand zwischen Räumen verwendet werden kann bekannt, mit einer eine Vielzahl von Kammern aufweisenden ersten Schicht, die zu wenigstens einer Flachseite oberflächenoffen ausgebildet ist und mit einer auf diese oberflächenoffene Flachseite der ersten Schicht aufgebrachten Deckschicht, wobei die erste Schicht eine Tiefe von 5 bis 50 mm und die Kammern eine Querschnittsfläche von 12,56 bis 75,5 mm² aufweisen und wobei die Deckschicht eine Dicke von 0,2 bis 0,48 mm aufweist und wobei in der Deckschicht eine Vielzahl von Öffnungen mit einer Querschnittsfläche von 0,02 - 0,50 mm² ausgebildet sind. Die Deckschicht besteht aus Aluminium oder aus einer Aluminiumlegierung. Die erste Schicht ist massiv einstückig aus thermoplastischem Kunststoff mit darin ausgebildeten Kammern.

DE 30 44 865 C2 zeigt eine andere schallabsorbierende Platte für die Verwendung in Räumen mit besonderen hygienischen Anforderungen. Die Platte besitzt eine eine Vielzahl von Kammern aufweisende erste Schicht, die zu wenigstens einer Flachseite oberflächenoffen ausgebildet ist und mit einer auf diese oberflächenoffene Flachseite der ersten Schicht aufgebrachten Deckschicht, wobei die erste Schicht eine Tiefe von 38 mm und die Kammern eine Querschnittsfläche von 126,6 mm² aufweisen und wobei die Deckschicht eine Dicke von 0,038 mm aufweist und von einer Polymer-Membran gebildet ist. Die Deckschicht weist keine Öffnungen auf, um Pilzen und Bakterien dadurch keine Brutstätte im Innern der Platte zu bieten.

US 2003/0141144 A1 und DE 691 08 710 T2 zeigen schallabsorbierende Auskleidungen in Flugzeugtriebwerken, wobei die aufgrund von Hochgeschwindigkeitsluftströmungen entstehenden Geräusche von der schallabsorbierenden Auskleidung gedämpft werden.

Aufgabe der Erfindung ist es, ein schallabsorbierendes Raumteilerelement zu schaffen, das optisch ansprechend wirkt und sich durch gute Schallabsorption auszeichnet.

Diese Aufgabe wird erfindungsgemäß gelöst durch ein schallabsorbierendes Raumteilerelement mit einer eine Vielzahl von Kammern aufweisenden ersten Schicht, die zu wenigstens einer Flachseite oberflächenoffen ausgebildet ist, wobei die Kammern aus gefalteten und verschweißten Folienbahnen gebildet sind, und mit einer auf diese oberflächenoffene Flachseite der ersten Schicht aufgebrachten Deckschicht, wobei die erste Schicht eine Tiefe von 20 bis 150 mm und die Kammern eine Querschnittsfläche von 80 bis 1600 mm² aufweisen und wobei die Deckschicht elastisch ist und eine Dicke von 0,1 bis 0,3 mm aufweist und von einer thermoplastischen und lichtdurchlässigen Polymer-Folienschicht gebildet ist, und wobei in der Polymer-Folienschicht eine Vielzahl von Öffnungen mit einer Querschnittsfläche von 0,03 - 0,50 mm² ausgebildet sind.

Die Vielzahl von Kammern der ersten Schicht ähneln einer wabenähnliche Struktur, die wenigstens auf einer Flachseite oberflächenoffen ist. Die erste Schicht kann in vorteilhafter Weise entsprechend DE 199 28 712 C1 ausgebildet und hergestellt sein. Dabei werden lichtdurchlässige Folienbahnen durch ein System aus parallel angeordneten Schweißelementen geführt und nach einer Faltung so verschweißt, dass die Kammern gebildet werden. Beide Seiten der ersten Schicht der Kammern sind oberflächenoffen ausgebildet.

Die Vielzahl von Öffnungen können in der Deckschicht eine Perforation bilden. Dabei kann das Muster eine systematische Struktur aufweisen oder unstrukturiert ausgebildet sein.

Durch die lichtdurchlässige aus einer thermoplastischen Polymer-Folienschicht gebildete Deckschicht wird das Helligkeitsniveau des Raums durch den Raumteiler nicht oder nur wenig beeinträchtigt, was als angenehm und vorteilhaft empfunden wird.

Bei systematischen Untersuchungen erfindungsgemäßer schallabsorbierender Raumteilerelemente wurden sehr gute Schallabsorptionsgrade festgestellt.

Die Deckschicht weist eine Dicke im Bereich von 0,1 bis 0,3 mm auf, in dem das Maximum des erzielbaren schallabsorbierenden Verhaltens liegt.

Die Vielzahl der Öffnungen in der Deckschicht bildet einen Flächenanteil von bis zu 1 % der Deckschicht.
Darüber hinaus wird ein Ausführungsbeispiel des schallabsorbierenden Raumteilerelements bevorzugt, bei dem die Querschnittsfläche der Öffnungen im Wesentlichen verrundet ist, insbesondere kreisförmig ist. Vorteilhaft dabei ist, dass die Öffnungen durch herkömmliche Stanzwerkzeuge einfach in die Deckschicht eingebracht werden können.

Vorzugsweise findet ein Ausführungsbeispiel des schallabsorbierenden Raumteilerelements Verwendung, bei dem die Deckschicht durchsichtig ist. Von Vorteil ist dabei, dass geräuschintensive Bereiche durch das Raumteilerelement nach außen gedämpft werden können, aber dennoch von außen hin einsehbar sind.

Ferner wird ein Ausführungsbeispiel des schallabsorbierenden Raumteilerelements vorgeschlagen, bei dem die Polymer-Folienschicht Polyethylenterephthalat oder Polycarbonat umfasst. Besonders vorteilhaft dabei ist, dass auf handelsübliche thermoplastische Polymerfolien zurückgegriffen werden kann. Insbesondere bei der Verwendung einer Polycarbonatschicht zeichnet sich das schallabsorbierende Raumteilerelement durch eine besondere Flammenbeständigkeit auf, wodurch eine Verwendung in Bereichen mit bestimmten Brandschutzauflagen möglich ist.

Die Querschnittsfläche der Kammern ist rechteckig, jedoch vorzugsweise mit verrundeten Eckbereichen. Ein besonderer Vorteil liegt darin, dass bei deren Herstellung auf ein bekanntes Verfahren zurückgegriffen werden kann.

Eine vorteilhafte Weiterbildung des schallabsorbierenden Raumteilerelements sieht vor, dass das Raumteilerelement eine Vielzahl von ersten Schichten mit Kammern aufweist. Dabei ist es denkbar, dass die Kammern der ersten Schicht beispielsweise fluchtend mit Kammern der zweiten Schicht angeordnet sind. Von besonderem Vorteil ist dabei, dass das schallabsorbierende Verhalten des Raumteilerelements durch die Verwendung von mehreren Schichten weiter gesteigert werden kann.

Schließlich wird ein Ausführungsbeispiel des schallabsorbierenden Raumteilerelements vorgeschlagen, der sich dadurch auszeichnet, dass die die Kammern begrenzenden Wandungen der ersten Schicht im Wesentlichen senkrecht zur Ebene des Raumteilers erstreckt sind.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Zeichnung zeigt:
- Figur 1: eine Explosionsdarstellung eines erfindungsgemäßen schallabsorbierenden Raumteilerelements;
- Figur 2: das erfindungsgemäße schallabsorbierende Raumteilerelement gemäß Figur 1 im montierten Zustand;
- Figur 3: eine Draufsicht auf das erfindungsgemäße schallabsorbierende Raumteilerelement gemäß Figur 2;
- Figur 4: eine Schnittansicht mit Schnittebene I-I gemäß Figur 3;
- Figur 5: eine Vergrößerung des Bereichs II gemäß Figur 4;
- Figur 6: eine grafische Darstellung des Schallabsorptionsgrads über der Terzmittenfrequenz eines erfindungsgemäßen Raumteilerelements.

Die Figuren zeigen ein schallabsorbierendes Raumteilerelement 2 mit einer Vielzahl von Kammern 4. Die Kammern 4 sind aus gefalteten und verschweißten lichtdurchlässigen Folienbahnen gebildet. Die Kammern 4 bilden zusammen eine erste Schicht 6 des Raumteilerelements 6, die in den Figuren zu Flachseiten 8, 10 oberflächenoffen ausgebildet ist. Die Kammern 4 der erste Schicht 6 sind auf Höhe der Flachseite 8 mit einer Deckschicht 12 und auf Höhe der Flachseite 10 mit einer Deckschicht 14 nach außen hin abgeschlossen. Die Deckschichten weisen dabei eine Vielzahl von Öffnungen 16 auf.

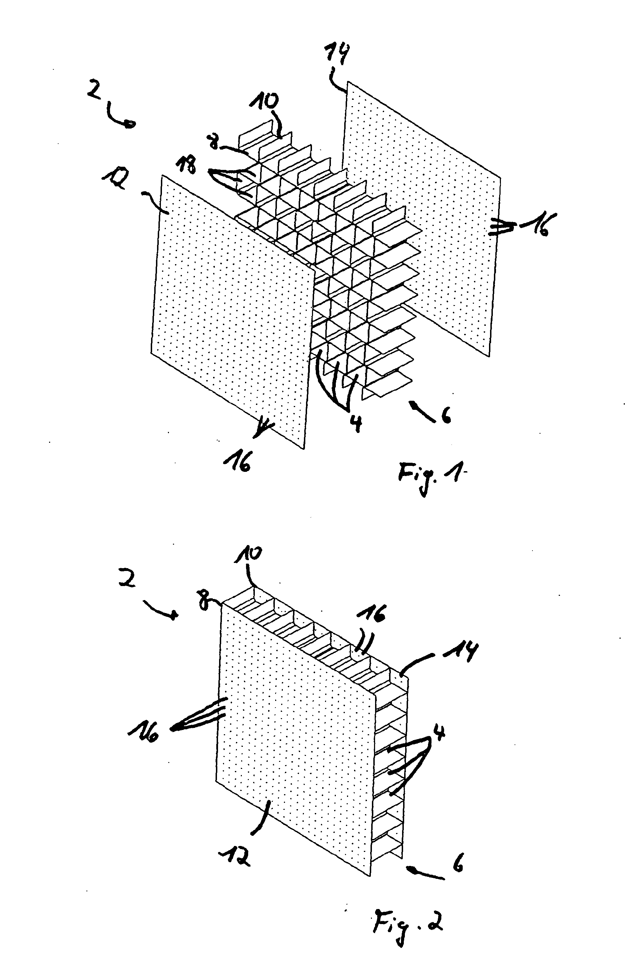

Aus Figur 1 ist ersichtlich, dass die Schicht 6 eine Vielzahl von Kammern 4 aufweist, die einen im Wesentlichen rechteckigen Querschnitt aufweisen. Die Kammern 4 werden durch Wandungen 18 begrenzt, die im Wesentlichen senkrecht zu den Flachseiten 12, 14 des schallabsorbierenden Raumteilerelements 2 stehen. Die Kammern 4 sind nach zwei Seiten hin oberflächenoffen ausgebildet. Alle Öffnungen der Kammern 4 der ersten Schicht 6 liegen dabei in einer Ebene, wobei ein jeweiliger Öffnungsrand auf der einen Seite die Flachseite 8 und auf der gegenüberliegenden Seite die Flachseite 10 definiert. Mittels der Deckschichten 12 und 14 werden die oberflächenoffenen Kammern nach außen hin abgedeckt.

In Figur 2 ist ein erfindungsgemäßes Raumteilerelement 2 im montierten Zustand ersichtlich. Die Deckschichten 12 und 14 sind fest mit den Kammern 4 bzw. mit der mittleren ersten Schicht 6 verbunden. Erfindungsgemäß weisen die Deckschichten 12, 14 eine Dicke von 0,1 bis 0,5 mm auf. Sie sind vorzugsweise von Folien gebildet. Aufgrund dieser relativ dünnen Dicke führt das Einfallen der Schallwellen dazu, dass die Deckschichten 12, 14 zumindest bereichsweise anfangen zu schwingen. Dabei geben sie die Schwingungen an die Kammern 4 weiter, die somit auch zum Schwingen angeregt werden. Hierbei wird Schallenergie in Bewegungsenergie der Deckschichten und der Kammern des schallabsorbierenden Raumteilerelements 2 umgewandelt. Hierdurch wird dem Schall Energie entzogen. Deckschichten 12, 14 und Kammern 4 wirken absorbierend.

Unterstützt wird die absorbierende Wirkung der Deckschichten 12, 14 und der Kammern 4 durch die Öffnungen 16 in den Deckschichten 12, 14. Dadurch gelangt Schall direkt in die Kammern 4.

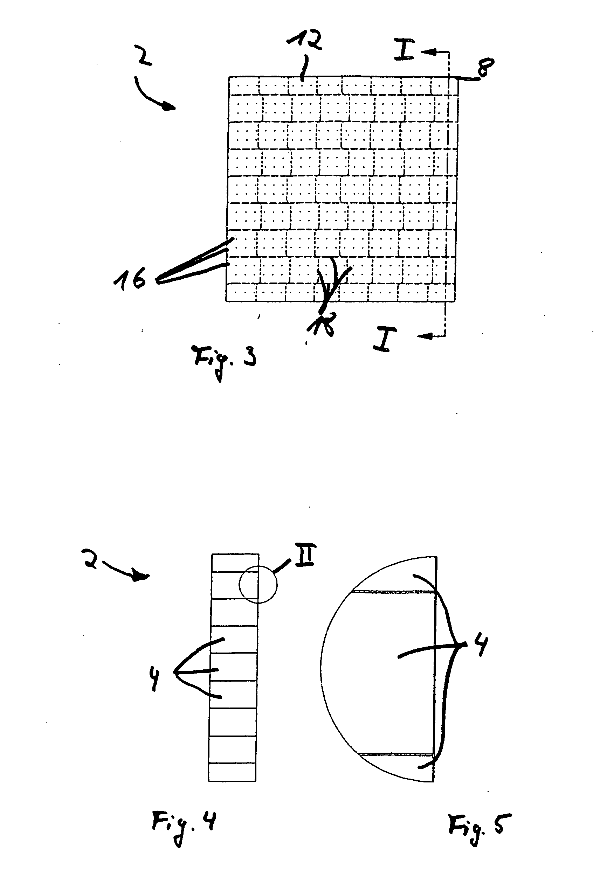

Aus Figur 3 ist ersichtlich, dass die Wandungen 18 im Wesentlichen senkrecht zu den Flachseiten 8, 10 des schallabsorbierenden Raumteilerelements 2 stehen. Kammern 4, die auf ein- und derselben Höhe liegen, bilden jeweils eine Reihe. Die Reihen können jedoch auch leicht zueinander versetzt angeordnet sein. Insbesondere aus Figur 4 ist ein Ausführungsbeispiel des Raumteilerelements 2 ersichtlich, bei dem die Reihen parallel zueinander angeordnet sind.

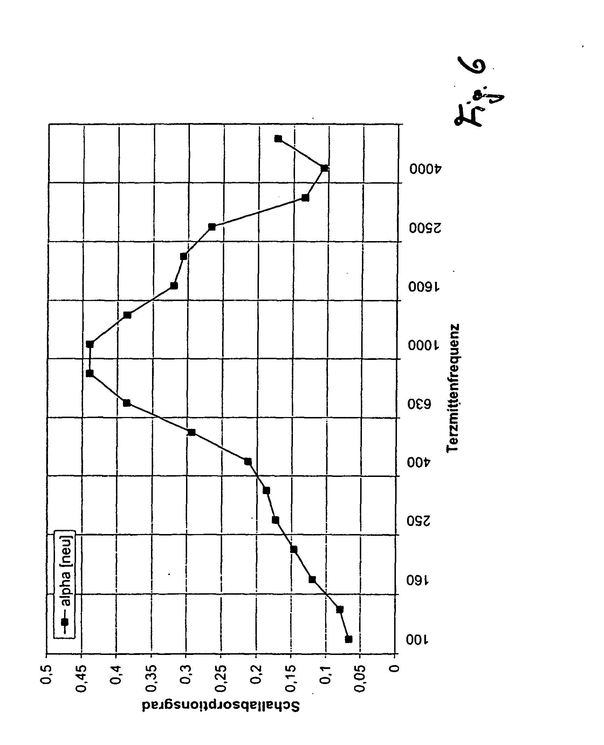

Figur 6 zeigt eine graphische Darstellung der Messung gemäß DIN EN ISO 354 des schallabsorbierenden Verhaltens eines erfindungsgemäßen Raumteilerelements 2 bei einer Messung frei im Raum, vorzugsweise in einem Bereich von 400 Hz. bis 1500 Hz.

## Patentansprüche

1. Schallabsorbierendes Raumteilerelement (2) mit einer eine Vielzahl von Kammern (4) aufweisenden ersten Schicht (6), die zu beiden Flachseiten (8, 10) oberflächenoffen ausgebildet ist, wobei die Kammern (4) aus gefalteten und verschweißten Folienbahnen gebildet und rechteckig sind, und mit je einer auf jede oberflächenoffene Flachseite (8, 10) der ersten Schicht (6) aufgebrachten Deckschicht (12, 14), wobei die erste Schicht (6) eine Tiefe von 20 bis 150 mm und die Kammern (4) eine Querschnittsfläche von 80 bis 1600 mm² aufweisen, wobei die Deckschicht (12, 14) elastisch ist und eine Dicke von 0,1 bis 0,3 mm aufweist und von einer thermoplastischen und lichtdurchlässigen Polymer-Folienschicht gebildet ist, wobei in der jeweiligen Polymer-Folienschicht eine Vielzahl von Öffnungen (16) mit einer Querschnittsfläche von 0,03 - 0,50 mm² ausgebildet sind, und wobei die Vielzahl der Öffnungen (16) in der Deckschicht (12, 14) einen Flächenanteil von bis zu 1% der Deckschicht (12, 14) ausbilden.

2. Schallabsorbierendes Raumteilerelement (2) nach Anspruch 1, **dadurch gekennzeichnet, dass** die Querschnittsfläche der. Öffnungen (16) im Wesentlichen verrundet ist, insbesondere kreisförmig ist.

3. Schallabsorbierendes Raumteilerelement (2) nach einem der vorhergehenden Ansprüche, **dadurch gekennzeichnet, dass** die Deckschicht (12, 14) durchsichtig ist.

4. Schallabsorbierendes Raumteilerelement (2) nach einem der vorhergehenden Ansprüche, **dadurch gekennzeichnet, dass** die Polymer-Folienschicht Polyethylenterephthalat oder Polycarbonat umfasst.

5. Schallabsorbierendes Raumteilerelement (2) nach einem der vorhergehenden Ansprüche, **dadurch gekennzeichnet, dass** das Raumteilerelement (2) eine Vielzahl von ersten Schichten (6) mit Kammern (4) aufweist.

6. Schallabsorbierendes Raumteilerelement (2) nach einem der vorhergehenden Ansprüche, **dadurch gekennzeichnet, dass** die die Kammern (4) begrenzenden Wandungen (18) der ersten Schicht (6) im Wesentlichen senkrecht zu der Flachseite (8, 10) der Ebene des Raumteilerelements (2) erstreckt sind.

## Claims

1. A sound-absorbing room dividing element (2), having a first layer (6), which has a plurality of chambers (4) and is embodied as open at the surface toward both flat sides (8, 10), wherein the chambers (4) are formed from folded, fused sheets and are rectangular, and having one cover layer (12, 14) applied to each flat side (8, 10), open at the surface, of the first layer (6); wherein the first layer (6) has a depth of 20 to 150 mm, and the chambers (4) have a cross-sectional area of 80 to 1600 mm²; wherein the cover layer (12, 14) is elastic and has a thickness of 0.1 to 0.3 mm and is formed by a thermoplastic, light-transmissive polymer film layer; wherein a plurality of openings (16) with a cross-sectional area of 0.03 to 0.50 mm² are embodied in each polymer film layer; and wherein the plurality of openings (16) in the cover layer (12, 14) form a proportion of the surface area of up to 1% of the cover layer (12, 14).

2. The sound-absorbing room dividing element (2) as defined by claim 1, **characterized in that** the cross-sectional area of the openings (16) is essentially rounded, in particular circular.

3. The sound-absorbing room dividing element (2) as defined by one of the foregoing claims, **characterized in that** the cover layer (12, 14) is translucent.

4. The sound-absorbing room dividing element (2) as defined by one of the foregoing claims, **characterized in that** the polymer film layer includes polyethylene terephthalate or polycarbonate.

5. The sound-absorbing room dividing element (2) as defined by one of the foregoing claims, **characterized in that** the room dividing element (2) has a plurality of first layers (6) with chambers (4).

6. The sound-absorbing room dividing element (2) as defined by one of the foregoing claims, **characterized in that** the walls (18) of the first layer (6) that define the chambers (4) are extended essentially perpendicular to the flat side (8, 10) of the plane of the room dividing element (2).

## Revendications

1. Élément de cloison (2) insonorisant, comportant une première couche (6), qui comporte une pluralité de chambres (4) et qui est ouverte en surface vers les deux côtés plats (8, 10), lesdites chambres (4) étant rectangulaires et étant formées par des bandes de feuilles pliées et soudées, et comportant respectivement une couche de protection (12, 14) appliquée sur chacun des côtés plats (8, 10) ouverts en surface de la première couche (6), ladite première couche (6) ayant une profondeur de 20 à 150 mm et les chambres (4) ayant une section avec une surface de 80 à 1 600 mm², la couche de protection (12, 14) étant élastique et ayant une épaisseur de 0,1 à 0,3 mm et étant formée par une couche de feuille polymère thermoplastique et diaphane, sachant que dans chaque couche de feuille polymère est réalisée une pluralité d'orifices (16) avec une surface de section de 0,03 à 0,50 mm², et la pluralité d'orifices (16) occupant dans la couche de protection (12, 14) une part de surface allant jusqu'à 1 % de la couche de protection (12, 14).

2. Élément de cloison (2) insonorisant selon la revendication 1, **caractérisé en ce que** la surface de la section des orifices (16) est sensiblement arrondie, en particulier circulaire.

3. Élément de cloison (2) insonorisant selon l'une quelconque des revendications précédentes, **caractérisé en ce que** la couche de protection (12, 14) est transparente.

4. Élément de cloison (2) insonorisant selon l'une quelconque des revendications précédentes, **caractérisé en ce que** la couche de feuille polymère contient du polyéthylènetéréphtalate ou du polycarbonate.

5. Élément de cloison (2) insonorisant selon l'une quelconque des revendications précédentes, **caractérisé en ce que** l'élément de cloison (2) comporte une pluralité de premières couches (6) avec des chambres (4).

6. Élément de cloison (2) insonorisant selon l'une quelconque des revendications précédentes, **caractérisé en ce que** les parois (18), délimitant les chambres (4), de la première couche (6) sont disposées sensiblement perpendiculairement au côté plat (8, 10) du plan de l'élément de cloison (2).
